Europäisches Patentamt

European Patent Office

Office européen des brevets

(19)

(11) Veröffentlichungsnummer: **0 134 410**
**B1**

(12)

# EUROPÄISCHE PATENTSCHRIFT

(45) Veröffentlichungstag der Patentschrift:
**22.03.89**

(51) Int. Cl.⁴: **H 02 J 7/04,** G 01 R 31/36,
A 61 C 1/06

(21) Anmeldenummer: **84105901.7**

(22) Anmeldetag: **24.05.84**

(54) Ladegerät für eine batteriegetriebene chirurgische Maschine.

(30) Priorität: **13.07.83 DE 3325282**

(43) Veröffentlichungstag der Anmeldung:
**20.03.85 Patentblatt 85/12**

(45) Bekanntmachung des Hinweises auf die Patenterteilung:
**22.03.89 Patentblatt 89/12**

(84) Benannte Vertragsstaaten:
**AT BE CH DE FR GB IT LI NL SE**

(56) Entgegenhaltungen:
**DE-A- 3 218 367**
**FR-A- 2 182 731**
**FR-A- 2 477 282**
**US-A- 3 343 060**
**US-A- 4 342 954**

(73) Patentinhaber: **Howmedica International, Inc.**
**Zweigniederlassung Kiel,**
**Professor-Küntscher-Strasse 1-5, D-2301 Schönkirchen**
**üb. Kiel (DE)**

(72) Erfinder: **Richter, Karl M., Dipl.-Ing., Haferkamp 14,**
**D-2304 Wendtorf (DE)**
Erfinder: **Harder, Hans E., Mecklenburger Strasse 25,**
**D-2301 Probsteierhagen (DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Neuer Wall 41, D-2000 Hamburg 36 (DE)**

## Beschreibung

Die Erfindung bezieht sich auf ein Ladegerät für eine batteriebetriebene chirurgische Maschine nach dem Obergriff des Patentanspruches 1.

Ein derartiges Ladegerät ist bekannt (US-A-4 288 733). Der Batterieteil, der zum Beispiel mehrere Nickelcadmiumzellen enthält, ist ein von der chirurgischen Maschine leicht trennbares Teil, zum Beispiel Bestandteil des Handgriffes. Die Batterie treibt einen Elektromotor, der seinerseits einen Bohrer, Fräser, Schleifer usw. antreibt. Nach einer gewissen Laufdauer erfordern die Batterien eine Wiederaufladung. Der Batterieteil wird vom übrigen Maschinengehäuse entfernt und mit dem Ladegerät verbunden.

Für den chirurgischen Einsatz muß der Batterieteil zuverlässig arbeiten. Es muß sichergestellt sein, daß während eines Einsatzes der Batterieteil nicht erschöpft. Die chirurgische Operation kann bekanntermaßen nicht unterbrochen und wieder fortgesetzt werden, bis eine Aufladung erfolgt ist. Zwar ist es möglich, Ersatzbatterieteile bereitzuhalten, jedoch besteht auch bei diesen die Gefahr, daß sie nicht ausreichend aufgeladen sind, wenn nicht notwendige Vorkehrungen getroffen werden.

Vor allem Nickelcadmiumzellen neigen dazu, rasch zu erschöpfen, wenn sie nach mehrmaligem Aufladen nicht unterhalb eines bestimmten Wertes entladen wurden.

Ein solches Ladegerät, welches Nickelcadmium-Akkumulatoren, auch kurz NC-Akkus genannt, zunächst bis zu einem vorgegebenen Spannungswert entlädt, um sie anschließend zu laden, ist aus der US-A-4 342 954 bekannt. Diese Patentschrift nutzt dabei den allgemeinen Wissensstand, daß NC-Akkus bei mehrfacher Teilladung nur mehr, wegen des sogenannten «Memoryeffekts», einen Teil der Gesamtkapazität speichern können und verweist diesbezüglich auf die Fachzeitschrift IEEE-Spectrum, September 1976, Seiten 33 bis 36. Nachdem ferner bekannt ist, daß ein mittlerer Entladezustand nur schwer über die Zellenspannung erfaßbar ist, lehrt diese Patentschrift, den NC-Akku zunächst bis zu einem vorgebbaren unteren Spannungswert zu entladen, um ihn anschließend zeitbegrenzt zu laden, da gerade bei NC-Akkus das spannungsabhängige Aufladen die Gefahr des Überladens birgt.

Bei einem derartigen kontinuierlich zeitabhängig ladenden Ladegerät wird einerseits zwar ein Überladen verhindert, andererseits ist es allerdings unmöglich, eine Zustandskontrolle des Akkus zu erhalten, die bei Akkus im chirurgischen Einsatzbereich, wie bereits ausgeführt, besonders wichtig ist. Ein z.B. vorhandener Defekt des Akkus wird beim vorgenannten Stand der Technik am Ende des zeitbegrenzten Ladevorganges also nicht offenbar.

Der Erfindung liegt daher die Aufgabe zugrunde, ein Ladegerät für eine batteriebetriebene chirurgische Maschine zu schaffen, mit welchem sichergestellt werden kann, daß aufgeladene Akkumulatoren oder Zellen, insbesondere Nickelcadmiumzellen zuverlässig arbeiten.

Diese Aufgabe ist erfindungsgemäß durch die kennzeichnenden Merkmale des Patentanspruches 1 gelöst.

In der einen Stellung des Wahlschalters lädt die Ladeschaltung die Batterie auf einen vorgegebenen Höchstwert für die Ladespannung auf, unabhängig von welchem Ausgangspunkt der Ladespannung die Aufladung erfolgte. Ein derartiger Betrieb wird normalerweise nur in besonderen Fällen gewählt werden, wenn es darauf ankommt, den Batterieteil möglichst schnell erneut aufzuladen. Im anderen Fall hingegen erfolgt zunächst eine Entladung der Batterie auf einen vorgegebenen unteren Wert der Ladespannung, zum Beispiel von 25% der Nenn-Ladespannung bzw. auf einen Ladespannungswert, der etwa 25% der Nennkapazität der Batterie entspricht. Anschließend erfolgt automatisch das Aufladen bis zu einem vorgegebenen Höchstwert, zum Beispiel einer Ladespannung, die 75% der Nennkapazität entspricht. Hierdurch ist sichergestellt, daß kein vorzeitiger Erschöpfungszustand eintritt, der durch wiederholtes Aufladen und zu geringes Entladen der Batterie verursacht wird.

Nach einer weiteren Ausgestaltung der Erfindung ist vorgesehen, daß eine dritte Stellung für den Wahlschalter vorgesehen ist, in der die Ladeschaltung die Batterie zunächst auf einen vorgegebenen unteren Spannungswert entlädt, dann auf den vorgegebenen oberen Wert auflädt, dann erneut auf den vorgegebenen unteren Spannungswert entlädt und schließlich auf den vorgegebenen oberen Spannungswert erneut auflädt, während der zweiten Ent- und Wiederaufladung die Ladeschaltung in vorgegebenen Zeitintervallen den Ist-Spannungswert mit dem Soll-Spannungswert vergleicht und ein Signal auf eine Anzeige gibt, wenn der Vergleichswert eine vorgegebene Größe erreicht.

Auf diese Weise wird dem Ladevorgang zugleich eine Testphase zugeordnet. Ohne ein erstes Ent- und Wiederaufladen wäre ein Soll-Ist-Wertvergleich während der verschiedenen Stadien der Ent- und Wiederaufladekurve wenig aussagekräftig. Aus diesem Grunde erfolgt zunächst ein Entladen und ein erneutes Wiederaufladen, bevor das eigentliche Testprogramm, das dem eigentlichen Ladeprogramm parallel läuft, durchgeführt wird. Durch das erstmalige Ent- und Wiederaufladen wird mithin die Batterie vorbereitet und auf einen vorgegebenen Aufladungszustand gebracht, zum Beispiel auf 75% ihrer Ladekapazität. Anschließend wird in Zeitinvervallen der Ladespannungswert mit einem vorgegebenen Sollwert verglichen. Sind die Vergleichswerte zu groß, wird angezeigt, daß ein Defekt vorliegt, der zumeist durch den inneren Zustand der Batterie bedingt ist.

Damit eine Übersicht erhalten wird über die einzelnen Betriebszustände des erfindungsgemäßen Ladegerätes, sieht eine weitere Ausgestaltung der Erfindung vor, daß auf dem Gehäuse der Verlauf der Entlade- und Ladekurve angebracht ist und unterhalb der Kurven eine Reihe von Leuchtdioden angeordnet ist, die einen bestimmten Abschnitt der Kurve repräsentieren. Durch Blinken der Leuchtdioden kann zum Beispiel angezeigt werden, in welchem Stadium der Ent- oder Aufladung sich das Ladegerät befindet.

Alle wiederaufladbaren Batterien haben die Eigenschaft, daß sie auch bei Nichtbelastung sich entladen. Daher sieht eine weitere Ausgestaltung der Erfindung vor, daß nach Beendigung der Aufladung die Ladeschaltung einen Reststrom erzeugt, der in Höhe des Selbstentladestroms der Batterie liegt.

Ein Ausführungsbeispiel der Erfindung wird nachfolgend anhand von Zeichnungen näher erläutert.

Fig. 1 zeigt schematisch und perspektivisch ein Ladegerät nach der Erfindung.

Fig. 2 zeigt ein Programmtableau des Ladegerätes nach Fig. 1.

Bevor auf die in den Zeichnungen dargestellten Einzelheiten näher eingegangen wird, sei vorangestellt, daß jedes der beschriebenen und gezeigten Merkmale für sich oder in Verbindung mit Merkmalen der Ansprüche von erfindungswesentlicher Bedeutung ist.

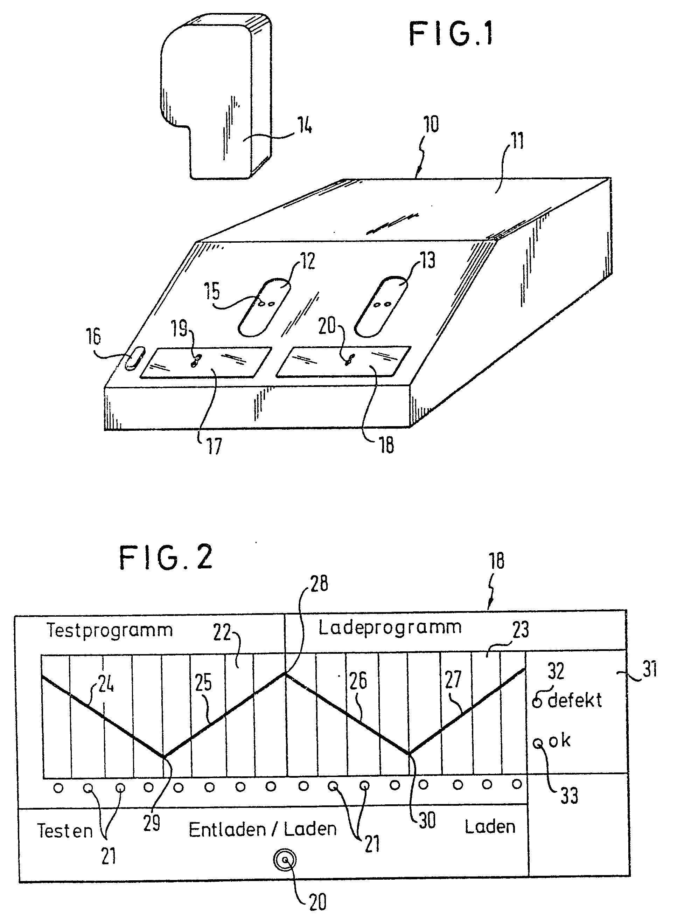

In Fig. 1 ist ein Ladegerät 10 dargestellt mit einem Gehäuse 11, das zwei Vertiefungen 12, 13 in einer geneigten Fläche aufweist zur Aufnahme eines Batterieteils 14 einer nicht weiter dargestellten chirurgischen Maschine. Der Batterieteil 14 kann zum Beispiel über eine Schwalbenschwanzverbindung in die Vertiefungen 12, 13 eingesetzt werden. Er besitzt nicht gezeigte Stecker, die in Steckbuchsen 15 einführbar sind.

Am Gehäuse ist ferner ein Einschalter 16 vorgesehen, um die Inbetriebnahme des mit Netz zu verbindenden Ladegerätes 10 zu ermöglichen. Schließlich sind zwei Programmtableaus 17, 18 vorgesehen, von denen jedes einen Kippschalter 19, 20 aufweist. In Fig. 2 ist das Programmtableau 18 näher dargestellt.

In dem Tableau 18 sind sechzehn Leuchtdioden 21 in Reihe angeordnet. Die ersten acht Leuchtdioden gehören zu einem ersten Feld 22 und die zweiten acht zu einem Feld 23. Im Feld 22 ist eine Kurve dargestellt mit einem geraden abfallenden Ast 24 und einem ansteigenden Ast 25. Entsprechend ist im Feld 23 ein abfallender Ast 26 und ein ansteigender Ast 27 dargestellt. Die Äste 25, 26 enden in einem gemeinsamen Maximum 28. Es liegt in Höhe der oberen Enden der Äste 24, 27. Die Äste 24 und 25 haben ein gemeinsames Minimum 29 und die Äste 26, 27 ein gemeinsames Minimum 30. Die Minima 29, 30 liegen in gleicher Höhe und entsprechen einer minimalen Entladung, zum Beispiel einer Nickelcadmiumzelle, zum Beispiel auf 25% der Nennkapazität. Das Maximum 28 entspricht einer maximalen Aufladung der Nickelcadmiumzelle, zum Beispiel 75% der Nennkapazität.

Neben dem rechten Feld 23 ist ein weiteres Feld 31 angeordnet mit einer Leuchtdiode 32 und einer Leuchtdiode 33.

Nachfolgend wird für die drei verschiedenen Stellungen des Kippschalters 20 der Ladebetrieb für den Batterieteil 14 beschrieben, wenn er in die Vertiefung 13 eingeführt wird.

1. Kippschalter 20 rechte Stellung

Der Batterieteil 14 wird unabhängig vom Maß seiner Entladung aufgeladen. Die nicht gezeigte Ladeschaltung beginnt sofort mit der Aufladung, wobei eine der Ladeschaltung zugeordnete Fühlschaltung den Ist-Spannungszustand bzw. Ist-Ladezustand des Batterieteils 14 ermittelt und über die zugeordnete Leuchtdiode 21 anzeigt, in welchem Aufladezustand sich der Batterieteil befindet. Ist das Maximum erreicht, schaltet die Ladeschaltung den Aufladebetrieb ab und reduziert den Ladestrom, der zum Beispiel 2 Ampere beträgt, auf ein Hundertstel dieses Betrages, um den Batterieteil weiterhin auf maximalen Aufladezustand zu halten, bis der Batterieteil zum Einsatz gelangt.

2. Kippschalter 20 mittlere Stellung

Bei diesem Ladevorgang beginnt das «Programm» ebenfalls im rechten Feld 23, wobei jedoch zunächst die Nickelcadmiumzellen entladen werden bis auf das Minimum 30. Das Entladen kann irgendwo zwischen dem Maximum 28 und dem Minimum 30 beginnen, je nach dem Entladezustand der Zellen. Die Entladung erfolgt ebenfalls zum Beispiel mit zwei Ampere. Ist das Minimum erreicht, schaltet die Ladeschaltung automatisch auf Aufladung und lädt den Batterieteil auf, bis das Maximum erreicht ist.

Bei diesem Betriebszustand des Ladegerätes kann nicht festgestellt werden, ob die Zellen noch einwandfrei arbeiten. Allerdings läßt sich auch bei diesem Betrieb ein fehlerhaftes Arbeiten des Ladegerätes feststellen, vor allem durch Messung der Entladungs- und Aufladungszeiten. Dauert zum Beispiel die Aufladung länger als 60 Minuten oder dauert die Entladung länger als 45 Minuten, blinkt die Leuchtdiode 32, um einen Defekt des Ladegerätes anzuzeigen.

3. Kippschalter 20 linke Stellung

Bei diesem Betrieb des Ladegerätes ist das Aufladen mit einem Testprogramm verknüpft. Zunächst wird die Zelle entladen, wobei die Entladung in der oben beschriebenen Weise irgendwo zwischen dem Maximum und dem Minimum des Astes 24 beginnt. Ist das Minimum 29 erreicht, beginnt die Ladeschaltung automatisch die Batterie bis zum Maximum 28 aufzuladen. Die ersten acht Leuchtdioden 21 zeigen den jeweils erreichten Punkt im Ladevorgang an. Nach dem Erreichen des Maximums 28 beginnt eine erneute Entladung des Batterieteils 14 bis zum Minimum 30. Während dieser Entladung erfolgt im vorliegenden Fall in vier Zeitintervallen eine Vergleichsmessung zwischen der Ist-Ladespannung und einem Sollwert. Weichen die zu vergleichenden Werte erheblich voneinander ab, wird dies durch die zum Beispiel rote Leuchtdiode 32 angezeigt. Nach dem Erreichen des Minimums 30 erfolgt erneut eine Aufladung entlang Ast 27, wobei wiederum in vier Zeitintervallen eine Ist-Sollwertmessung der Ladespannung vorgenommen wird. Auch in diesem Fall erfolgt eine Anzeige durch die Leuchtdiode 32, wenn der Vergleichswert eine vorgegebene Größe erreicht hat. Ist der Test zufriedenstellend verlaufen, ist damit sichergestellt, daß die Zelle von ihrer Kapazität her normal arbeitet. Nach Beendigung des Tests und gleichzeitig der Aufladung kann durch Aufleuchten der zum Beispiel grünen Leuchtdiode 33 die positive Beendigung des Ladevorgangs angezeigt werden.

**Patentansprüche**

1. Ladegerät für eine batteriebetriebene chirurgische Maschine mit einem einen Steckerabschnitt für ein Batterieteil (14) der Maschine aufweisenden Gehäuse (11), welches eine Ladeschaltung enthält, welche in einer Betriebsart die Batterie unmittelbar auflädt, und in einer anderen Betriebsart die Batterie zunächst bis zu einem vorgegebenen unteren Spannungswert entlädt und anschließend auflädt, dadurch gekennzeichnet, daß die Ladeschaltung die Batterie (14) bis zu einem vorgegebenen oberen Spannungswert auflädt; und daß in einer dritten Betriebsart die Ladeschaltung die Batterie (14) erneut auf den vorgegebenen unteren Spannungswert entlädt und anschließend auf den vorgegebenen oberen Spannungswert auflädt; und daß während der zweiten Ent- und Aufladung die Ladeschaltung in vorgegebenen Zeitintervallen den Ist-Spannungswert mit einem Soll-Spannungswert vergleicht und ein Signal auf eine Anzeige (32) gibt, wenn der Vergleichswert eine vorgegebene Größe erreicht; und daß für die Betriebsarten ein Wahlschalter (19, 20) am Gehäuse (11) angeordnet ist.

2. Ladegerät nach Anspruch 1, dadurch gekennzeichnet, daß auf dem Gehäuse der Verlauf der Entlade- und Ladekurve angebracht ist und unterhalb der Kurve eine Reihe von Leuchtdioden (21) angeordnet ist, die einen bestimmten Abschnitt der Kurve repräsentieren.

3. Ladegerät nach Anspruch 1 und 2, dadurch gekennzeichnet, daß nach Beendigung der Aufladung die Ladeschaltung einen Reststrom erzeugt, der in Höhe des Selbstentladestromes der Batterie (14) liegt.

**Claims**

1. A charging apparatus for a battery-operated surgical machine comprising a housing (11) havingsing a socket portion for the battery portion (14) of the machine, the housing comprising a charging circuit connected to directly charge the battery in one mode and to initially discharge the battery to a pre-determined lower voltage value and subsequently charge it ot another mode, characterized in that the charging circuit charges the battery (14) up to a predetermined upper voltage value and that in a third mode, the charging circuit again discharges the battery (14) down to the predetermined lower voltage value and subsequentyl charges it up to the predetermined upper voltage value, and in that during the discharging and charging operation, the charging circuit compares the actual voltage value with a set point voltage value at predetermined time intervals and transmits a signal to a display (32) when the result of the comparison reaches a predetermined value, and that a selecting switch (19, 20) for the modes is positioned at the housing (11).

2. A charging apparatus as claimed in claim 1, characterized in that the curve of the discharging and charging function is attached at the housing, and that a line of light-emitting diodes (21) is arranged below the curve, the diodes each denoting a distinct portion of the curve.

3. A charging apparatus as claimed in claim 1 and 2, characterized in that the charging circuit produces a residual current after termination of the charging, the residual current having the value of about the self discharging current of the battery (14).

**Revendications**

1. Appareil de charge pour une machine chirurgicale actionnée par batterie, comprenant un boîtier (11) comportant une portion à enfichage pour une partie batterie (14) de la machine et contenant un circuit de charge, lequel, dans un mode de fonctionnement, charge directement la batterie, et dans un autre mode de fonctionnement, décharge d'abord la batterie jusqu'à une valeur de tension inférieure préfixée, et ensuite la charge, caractérisé en ce que le circuit de charge charge la batterie (14) jusqu'à une valeur de tension supérieure préfixée; en ce que, dans un troisième mode de fonctionnement, le circuit de charge décharge à nouveau la batterie (14) jusqu'à la valeur de tension inférieure préfixée, et ensuite la charge jusqu'à la valeur de tension supérieure préfixée; en ce que, pendant la deuxième décharge et la deuxième charge, le circuit de charge compare, à des intervalles de temps préfixés, la valeur réelle de la tension à une valeur de consigne et fournit un signal à un indicateur (32) lorsque la valeur de comparaison atteint une grandeur préfixée; et en ce qu'un commutateur sélecteur (19, 20) des modes de fonctionnement est disposé sur le boîtier.

2. Appareil de charge selon la revendication 1, caractérisé en ce que le tracé de la courbe de décharge et de charge est placé sur le boîtier, avec une rangée de diodes luminescentes (21) qui représentent une partie déterminée de la courbe.

3. Appareil de décharge selon les revendications 1 et 2, caractérisé en ce qu'après terminaison de la charge le circuit de charge fournit un courant résiduel qui est au niveau du courant de décharge spontanée de la batterie (14).

# FIG.1

# FIG.2

| Testprogramm | 22 | 28 | Ladeprogramm | 23 | 18 |

Testen     29     Entladen / Laden     30     Laden

24   25   26   27

32 defekt

31

ok

33

21

20